# EUROPÄISCHE PATENTSCHRIFT

(11) **EP 1 182 022 B1**
(45) Veröffentlichungstag und Bekanntmachung des Hinweises auf die Patenterteilung: **09.07.2003**
(21) Anmeldenummer: 01105359.2
(22) Anmeldetag: 08.03.2001
(51) Int. Cl.: B29C 31/00, B29C 51/26

(54) **Anlage zur Vakuumformung und fertigen Bearbeitung von Kunststoffteilen**
Apparatus for vacuumforming and machining of plastic parts
Appareil pour former sous vide et pour l'usinage de produits en plastique

(30) Priorität: 18.08.2000 DE 10040390
(43) Veröffentlichungstag der Anmeldung: 27.02.2002
(73) Patentinhaber: GEISS Thermoforming eK, 96145 Sesslach (DE)
(72) Erfinder: Geiss, Manfred, 96145 Sesslach (DE)
(74) Vertreter: Reinhard - Skuhra - Weise & Partner

(56) Entgegenhaltungen:
- EP-A- 0 849 200
- WO-A-91/13747
- US-A- 5 086 729

## Beschreibung

Die Erfindung betrifft eine Anlage zur Herstellung und Fertigbearbeitung von Kunststoffteilen, mit einer Vakuumformmaschine, einer Beschickungseinrichtung für die Vakuumformmaschine und mit einer CNC-Nachbearbeitungsmaschine.

Bei einer derartigen Anlage dienen Vakuumformmaschinen dazu, Halbzeug aus einem Thermoplasten umzuformen. Dabei wird ein plattenförmiger Thermoplast beheizt und durch einen Luftdruck umgeformt, sobald der Raum zwischen dem plattenförmigen Thermoplasten und der Form evakuiert wird.

Für die Zuführung der in der Regel plattenförmigen Thermoplaste dienen Beschickungseinrichtungen, die gleichzeitig auch das fertig geformte Teil aus der Vakuumformmaschine entnehmen und einer nachgeordneten CNC-Nachbearbeitungsmaschine zuführen. In einer derartigen CNC-Nachbearbeitungsmaschine werden automatisch Endbearbeitungen der Vakuumformteile, wie Besäumen und das Versehen mit Aussparungen, Schlitzen, Bohrungen usw., vorgenommen. Hierbei ist es für die einwandfreie Nachbearbeitungsqualität wichtig, dass die von der Beschickungseinrichtung gelieferten Vakuumformteile stets lagegenau für die CNC-Nachbearbeitung zur Verfügung gestellt werden.

Aus dem europäischen Patent EP 0669 199 B1 ist es in diesem Zusammenhang bereits bekannt, zur Vermeidung einer Neueinjustierung des Vakuumformteils einen beweglichen Ladewagen einer Plattenbeschickungsmaschine gleichzeitig als Tisch für eine CNC-Nachbearbeitungsmaschine zu verwenden. Modifikationen einer Produktionslinie, z.B. durch den Einsatz von zwei verschiedenen CNC-Nachbearbeitungsmaschinen, sind jedoch nicht ohne weiteres möglich. Es besteht das Bedürfnis, zum einen den konstruktiven Aufwand für die funktionelle Verknüpfung der einzelnen Maschinen zu verringern und zum anderen eine Lösung verfügbar zu machen, mit der auch mehr als eine Beschickungseinrichtung und eine CNC-Nachbearbeitungsmaschine ohne zusätzliches Ausrichten präzise und ohne Längenbegrenzung in einer Fertigungslinie gekoppelt werden kann.

Erfindungsgemäß wird diese Aufgabe durch die im Patentanspruch 1 genannten Merkmale gelöst. Bevorzugte Merkmale, die die Erfindung vorteilhaft weiterbilden, sind den nachgeordneten Patentansprüchen zu entnehmen.

Erfindungsgemäß wird somit vorteilhaft eine Kopplung einer automatischen Vakuumformmaschine mit einer CNC-Nachbearbeitungsmaschine unter Einbeziehung der Beschickung und Entladung der bearbeiteten Teile mit Hilfe sogenannter Linearmotoren verwirklicht. Dabei sind als Sekundärteilanordnung derartiger Linearmotoren Dauermagnetprofilschienen vorgesehen, die über dem Wagen der Beschickungseinrichtung beginnen und sich mindestens bis zum Ende der CNC-Nachbearbeitungsmaschine erstrecken, bevorzugt noch bis zum Ende einer angeschlossenen Abstapelungseinrichtung.

Die Sekundärteilanordnung besteht vorzugsweise aus zwei Schienenprofilen, die an einander gegenüberliegenden Seiten der Beschickungseinrichtung und der CNC-Nachbearbeitungsmaschine in einer Ebene oberhalb der Beschickungsstation angeordnet sind. Der Einsatz dieser Dauermagnetschienenprofile hat den Vorteil, dass sie sich für eine fluchtende flexible Anordnung verschiedener weiterer Stationen beliebig lang ausführen lassen und zum anderen, dass zwei derartiger Dauermagnetschienenprofile elektronisch mit einer sogenannten "Gantry-Funktion" moderner CNC-Steuerung zu einem Gleichlauf zusammengeschlossen werden können, ohne dass irgendeine mechanische Verbindung zur Synchronisierung verwendet werden muss.

Auf den beiden Schienenprofilen sind mehrere, mindestens zwei Paare von Primärteilanordnungen der linearen Motoren in Form von Schlitten vorgesehen.

Aufgebaut sind diese schlittenförmigen Primärteilsätze zum einen im Bereich der Beschickungseinrichtung mit einem verbindenden Träger, welcher eine Aufnahmestation trägt. Diese Aufnahmestation diente dazu, Vakuumformteile, die auf dem Wagen der Beschickungsmaschine abgelegt wurden, aufzunehmen und in die Bearbeitungsstation der CNC-Nachbearbeitungsmaschinen hinein zu transportieren.

Ein weiterer Schlitten besitzt ebenfalls einen die Primärteile zu verbindenden Träger, der die zur Bearbeitung der Formteile notwendigen Achsen und Werkzeuge aufnimmt. Die Werkzeuge sind dabei entweder mit vier Achsen zu einer fünfachsigen Fräsbearbeitung ausgebildet, oder es werden fünf weitere Achsen zum Schneiden mit einem räumlich geführten Messer verwendet, wobei eine weitere Achse eine die Richtung des Messers führende Drehachse ist.

Für die Abstapelungseinrichtung ist ein weiterer Schlitten mit einem Aufbau wie der erste Schlitten für die Beschickungsmaschine vorgesehen. Der Schlitten nimmt die bearbeiteten Teile und die Abschnitte aus der CNC-Nachbearbeitungsmaschine auf und transportiert sie zu der Abstapelungseinrichtung.

Aufgrund der erfindungsgemäßen Konzeption wird vorteilhaft erreicht, dass alle einander zugeordneten Bewegungen in der Produktionslinie von der Beschickungseinrichtung bis zur Abstapelungseinrichtung exakt zueinander fluchten. Hier ist nur ein einmaliges Ausrichten der beiden Gantry-Achsen zum Wagen der Beschickungsanlage erforderlich, damit alle Zuordnungen immer präzise vorliegen und gehalten werden.

Des weiteren gibt es vorteilhaft keine Größenbegrenzungen für den Aufbau derartiger Anlagen, da die Sekundärteile von Linearmotoren beliebig lang gebaut werden können. Dies bedeutet beispielsweise, dass das Herausladen von bearbeiteten Teilen auf eine Stapelstation erfolgen kann, wobei mit geringfügiger Verlängerung der Achse bzw. Linie jedoch auch auf getrennte Stapelplätze entladen werden kann. Dies ermöglicht in günstiger Weise eine differenzierte Ablage, Beispielsweise können Abschnitte auf eine andere Position abgeworfen werden als Nutzteile.

Von Vorteil ist weiterhin, dass auf den Sekundärteilanordnungen beliebig viele Primärteilanordnungen montiert werden können. Dies ist bei langwierigen Nachbearbeitungen günstig, da dann beispielsweise statt einer zwei CNC-Nachbearbeitungsstationen vorgesehen werden können, wobei die Beschickungseinheit dann einfach abwechselnd auf die eine und auf die andere zuladen kann.

Von Vorteil ist weiterhin, dass die einzelnen Stationen in ihren Achswegen bis auf ein gegenseitiges Überholen beliebig verfahren werden. So ist es beispielsweise möglich, zum Beladen eines langen Werkstückes alle Primärteile bzw. Schlitten bis weit in den Wagen der Beschickungseinrichtung hinein zu verfahren. Alle beteiligten Schlitten können fast den gesamten Weg der Gesamtlänge der Sekundärteilanordnungen ausnutzen.

Mit der Erfindung wird somit ein Konzept für eine Anlage zum automatischen Entnehmen von Formteilen aus einer Vakuumformmaschine in eine CNC-Nachbearbeitungsmaschine und einem nachfolgenden Herausnehmen verfügbar gemacht, bei der eine gemeinsame Verfahrachse vom Wagen der Beschickungseinrichtung bis zu einer Abstapelungseinrichtung vorhanden ist, bei der die gemeinsame Verfahrachse bevorzugt als Sekundärteil eines Linearmotors ausgeführt wird, welche bevorzugt aus zwei steuerungstechnisch synchronen Achsen besteht, und bei der die Möglichkeit besteht, eine einzige intelligente Steuerung, vorzugsweise eine CNC-Steuerung, für die Steuerung und Regelung sämtlicher beteiligter Achsen einzusetzen, damit vorteilhaft eine einzige Bedienoberfläche und eine einzige Intelligenz (beispielsweise zur Kollisionsüberwachung) den Prozess führt.

Nachfolgend wird die Erfindung anhand der beigefügten Zeichnungen näher erläutert. Es zeigen:
- Fig. 1: eine schematisierte Draufsicht auf eine Anlage zur Herstellung und Bearbeitung von Kunststoffteilen; und
- Fig. 2: eine schematisierte Seitenansicht der in Fig. 1 dargestellten Anlage.

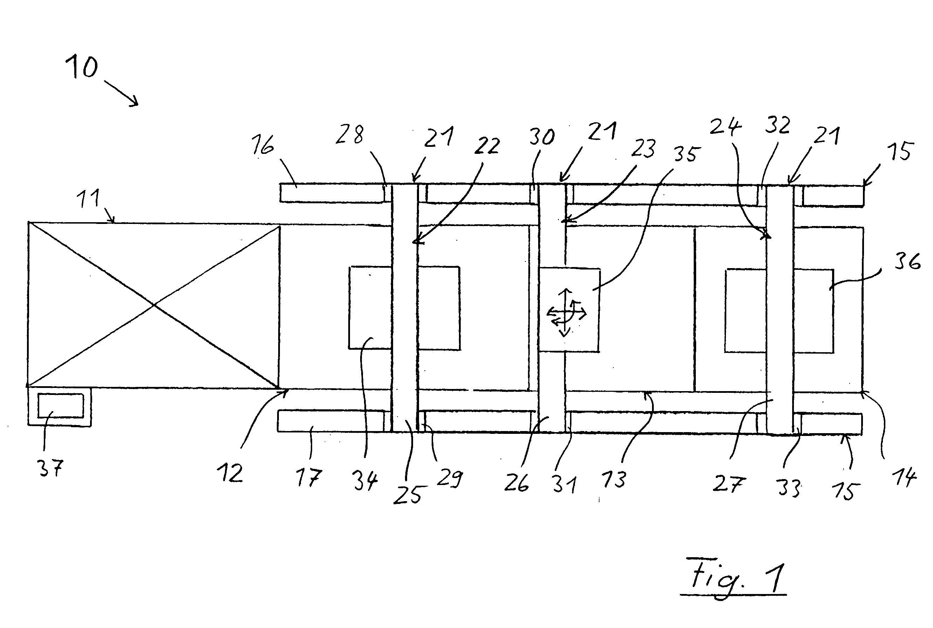

In Fig. 1 ist schematisch eine Draufsicht auf eine Anlage 10 zur Herstellung und Fertigbearbeitung von Kunststoffteilen dargestellt. Die Anlage 10 weist eine Vakuumformmaschine 11, eine Beschickungseinrichtung 12, eine CNC-Nachbearbeitungsmaschine 13 sowie eine Abstapelungseinrichtung 14 auf, die nebeneinander zur Bildung einer Fertigungslinie angeordnet sind.

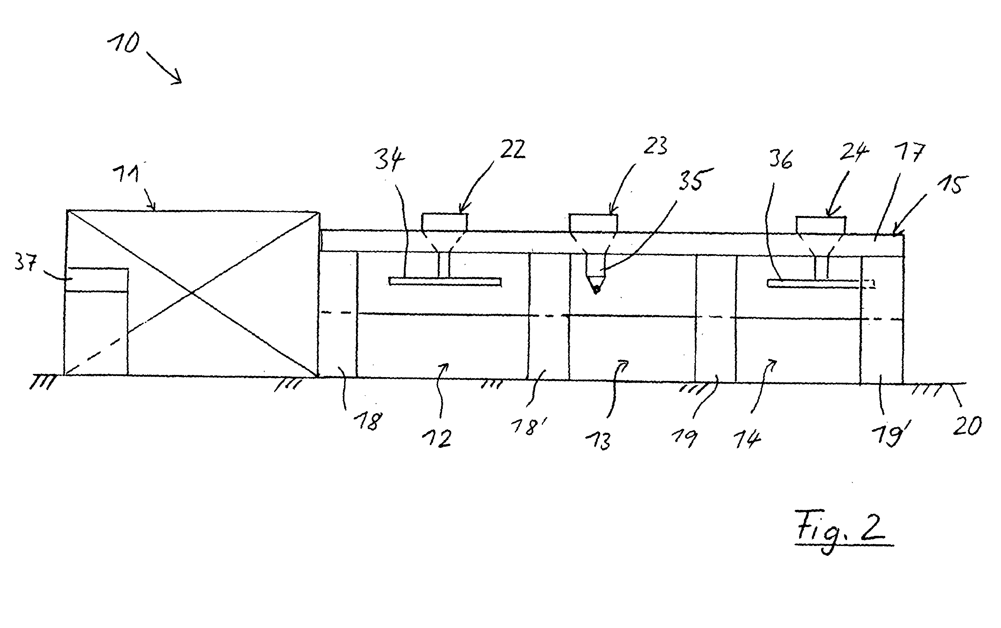

Für die Beschickungseinrichtung 12, die CNC-Nachbearbeitungsmaschine 13 sowie für die Abstapelungseinrichtung 14 ist eine gemeinsame Sekundärteilanordnung 15 eines Linearmotors vorgesehen, die aus zwei parallel zueinander verlaufenden Dauermagnetbahnprofilen 16 und 17 besteht, die ihrerseits parallel und jeweils auf einer Seite der Beschickungseinrichtung 12 der CNC-Nachbearbeitungsmaschine 13 und der Abstapelungseinrichtung 14 vorgesehen sind. Die Dauermagnetbahnprofile 16 und 17 erstrecken sich bei dem dargestellten Ausführungsbeispiel von dem Beginn der Beschickungseinrichtung 12 bis zum Ende der Abstapelungseinrichtung 14 und sind, wie Fig. 2 schematisch darstellt, auf Stützen 18, 18'; 19, 19' derart befestigt, dass sie sich auch parallel zu einer Bodenplatte 20 in einer Ebene oberhalb der Beschickungseinrichtung 12 erstrecken.

Als Primärteilanordnung 21 sind bei diesem Ausführungsbeispiel drei Schlitten 22, 23 und 24 vorgesehen. Die Schlitten 22, 23 und 24 besitzen jeweils einen Grundaufbau aus einem Träger 25, 26 bzw. 27, der sich jeweils quer zu der Fertigungslinie der Anlage zwischen den beiden Dauermagnetbahnprofilen 16 und 17 erstreckt und an diesen jeweils mit Primärteilanordnungen 28, 29 bzw. 30, 31 bzw. 32, 33 seitlich verlagerbar angeordnet ist.

Der Schlitten 22 trägt, wie in Fig. 2 angedeutet, eine Aufnahmestation 34, die dazu dient, Vakuumformteile, die auf einem Wagen der Beschickungseinrichtung 12 abgelegt wurden, aufzunehmen und in die Bearbeitungsstation der CNC-Nachbearbeitungsmaschine 13 hinein zu transportieren und auf einem dort vorgesehenen Bearbeitungstisch abzulegen.

Der Schlitten 23 trägt die zur Bearbeitung der Vakuumformteile notwendigen Achsen und Werkzeuge 35, wobei zum Schneiden mit räumlich geführtem Messer fünf Achsen eingesetzt werden, von denen eine eine Drehachse ist, welche die Richtung des Messers führt.

Der dritte Schlitten 24 trägt eine Entnahmestation 36 ähnlich der Aufnahmestation 34, die dazu dient, die bearbeiteten Vakuumformteile und Abschnitte aufzunehmen, aus der CNC-Nachbearbeitungsmaschine 13 aufzunehmen und in die Abstapelungseinrichtung 14 abzulegen.

Die beiden Dauermagnetbahnprofile können beliebig verlängert ausgeführt sein, um beispielsweise eine zweite CNC-Nachbearbeitungsmaschine und eine zweite Abstapelungseinrichtung in die Produktionslinie zu integrieren. Für die Steuerung der beiderseitigen Linearmotoren, die an dem jeweiligen Schlitten vorgesehen sind, ist eine CNC-Steuerung 37 vorgesehen, die mit einer sogenannten "Gantry"-Funktion die beiden Bahnen elektronisch zu einem Gleichlauf ("Königswelle") zusammenschließt, ohne dass irgendeine mechanische Verbindung zur Synchronisierung verwendet werden muss.

Die einzelnen Schlitten 22, 23 und 24 können in ihren Achswegen beliebig verfahren werden, sich jedoch nicht gegenseitig überholen. Dies ermöglicht beispielsweise das Verfahren der Schlitten bis weit in den Wagen der Beschickungseinrichtung zum Beladen eines langen Werkstücks.

## Patentansprüche

1. Anlage zur Herstellung und Fertigbearbeitung von Kunststoffteilen, mit
einer Vakuumformmaschine (11),
einer Beschickungseinrichtung (12) für die Vakuumformmaschine (119 und mit
einer CNC-Nachbearbeitungsmaschine (13),
**dadurch gekennzeichnet, dass** die Beschickungseinrichtung (12) wenigstens mit der CNC-Nachbearbeitungsmaschine (13) funktionell über eine gemeinsame Sekundärteilanordnung (15) eines Linearmotors verbunden ist,
wobei auf dieser Sekundärteilanordnung (15) Primärteilanordnungen (21) von Linearmotoren in Form von Schlitten (22, 23, 24) angeordnet sind, von denen wenigstens ein Schlitten (22) eine Aufnahmestation (34) für den Transport von Vakuumformteilen in die CNC-Nachbearbeitungsmaschine (13) sowie ein Schlitten (23) für die Lagerung von zur Bearbeitung der Vakuumformteile notwendigen Achsen und Werkzeuge vorgesehen ist.

2. Anlage nach Anspruch 1, **dadurch gekennzeichnet, dass** sich die Sekundärteilanordnung (15) bis in eine Abstapelungseinrichtung (14) erstreckt, die der CNC-Nachbearbeitungsmaschine (13) nachgeordnet ist.

3. Anlage nach Anspruch 1 oder 2, **dadurch gekennzeichnet, dass** die Sekundärteilanordnung (15) zwei Dauermagnetbahnen in Form von Schienenprofilen (16, 17) aufweist, die sich entlang der Beschickungseinrichtung (12) und der CNC-Nachbearbeitungsmaschine (13) erstrecken.

4. Anlage nach Anspruch 3, **dadurch gekennzeichnet, dass** die Schienenprofile (16, 17) an einander gegenüberliegenden Seiten der Beschickungseinrichtung (12) und der CNC-Nachbearbeitungsmaschine (13) angeordnet sind.

5. Anlage nach einem der Ansprüche 2 bis 4, **dadurch gekennzeichnet, dass** sich die Schienenprofile (16, 17) über die CNC-Nachbearbeitungsmaschine (13) hinaus bis in den Bereich der Abstapelungseinrichtung (14) erstrecken.

6. Anlage nach einem der Ansprüche 2 bis 5, **dadurch gekennzeichnet, dass** die Schienenprofile (16, 17) in einer Ebene oberhalb der Beschickungseinrichtung (12) angeordnet sind.

7. Anlage nach einem der Ansprüche 2 bis 6, **dadurch gekennzeichnet, dass** als weitere Primärteilanordnung (21) ein Schlitten (24) für die Abstapelungseinrichtung (14) vorgesehen ist.

8. Anlage nach einem der vorangehenden Ansprüche, **dadurch gekennzeichnet, dass** jeder Schlitten (22, 23, 24) ein Paar Primärteilsätze (28, 29; 30, 31; 32, 33) aufweist, die durch einen Träger (25; 26; 27) verbunden sind.

9. Anlage nach einem der vorangehenden Ansprüche, **dadurch gekennzeichnet, dass** die Primärteilanordnungen (21) jedes Schlittens (22, 23, 24) elektronisch zu einem Gleichlauf zusammengeschlossen sind.

10. Anlage nach einem der vorangehenden Ansprüche, **dadurch gekennzeichnet, dass** der Schlitten (23) für die CNC-Nachbearbeitungsmaschine eine 5-achsige Fräsbearbeitungseinrichtung (35) mit räumlich geführtem Messer aufweist.

11. Anlage nach einem der vorangehenden Ansprüche, **dadurch gekennzeichnet, dass** eine einzige intelligente Steuerung, vorzugsweise eine CNC-Steuerung, für sämtliche beteiligten Achsen vorgesehen ist.

## Claims

1. Installation for manufacturing and finishing plastic parts, comprising
a vacuum moulding machine (11),
a feeding means (12) for said vacuum moulding machine (11) and
a CNC finishing machine (13),
**characterised in that** said feeding means (12) is functionally connected at least to said CNC finishing machine (13) via a common secondary part assembly (15) of a linear motor,
wherein primary part assemblies (21) of linear motors are disposed in the form of carriages (22, 23, 24) on these secondary part assemblies (15), whereof at least one carriage (22) with a receiving station (34) is provided for conveying vacuum formed mouldings into said CNC finishing machine (13) and one carriage (23) is provided for storing axles and tools required for processing said vacuum formed mouldings.

2. Installation according to Claim 1, **characterised in that** said secondary part assembly (15) extends up into a stacking means (14) that joins said CNC finishing machine (13) on the downstream side.

3. Installation according to Claim 1 or 2, **characterised in that** said secondary part assembly (15) comprises two permanent magnet tracks in the form of rail profiles (16, 17) extending along said feeding means (12) and said CNC finishing machine (13).

4. Installation according to Claim 3, **characterised in that** said rail profiles (16, 17) are disposed on opposite sides of said feeding means (12) and said CNC finishing machine (13).

5. Installation according to any of the Claims 2 to 4, **characterised in that** said rail profiles (16, 17) extend beyond said CNC finishing machine (13) up into the zone of said stacking means (14).

6. Installation according to any of the Claim 2 to 5, **characterised in that** said rail profiles (16, 17) are disposed in a plane above said feeding means (12).

7. Installation according to any of the Claims 2 to 6, **characterised in that** a carriage (24) is provided as further primary part assembly (21) for said stacking means (14).

8. Installation according to any of the preceding Claims, **characterised in that** each carriage (22, 23, 24) comprises a pair of primary part sets (28, 29; 30, 31; 32, 33) that are connected by a carrier (25; 26; 27).

9. Installation according to any of the preceding Claims, **characterised in that** said primary part assemblies (21) of each carriage (22, 23, 24) are electronically joined to each other so as to achieve synchronism.

10. Installation according to any of the preceding Claims, **characterised in that** said carriage (23) comprises a 5-axis milling processing means (35) with a blade guided in space or said CNC finishing machine.

11. Installation according to any of the preceding Claims, **characterised in that** a single intelligent controller, preferably a CNC controller, is provided for all the axes involved.

## Revendications

1. Equipement de formage sous vide et d'usinage de produits en matière plastique comprenant
une machine de formage sous vide (11),
un dispositif d'alimentation (12) de la machine de formage sous vide (11) et
une machine à reprise à commande numérique par ordinateur (13),
**caractérisé en ce que** le dispositif d'alimentation (12) est connecté fonctionnellement au moins à la machine à reprise à commande numérique par ordinateur (13) par l'intermédiaire d'une disposition commune d'éléments secondaires (15) d'un moteur linéaire, sur cette disposition d'éléments secondaires (15) étant installées des dispositions d'éléments primaires (21) de moteurs linéaires sous forme de chariots (22, 23, 24), au moins l'un des chariots (22) disposant d'une station d'entrée (34) destinée à l'acheminement de pièces formées sous vide dans la machine à reprise à commande numérique par ordinateur (13), un autre chariot (23) étant prévu pour le stockage des axes et outils nécessaires à l'usinage des pièces formées sous vide.

2. Equipement selon la revendication 1, **caractérisé en ce que** la disposition d'éléments secondaires (15) s'étend jusque dans un dispositif d'empilage (14), installé en aval de la machine à reprise à commande numérique par ordinateur (13).

3. Equipement selon la revendication 1 ou 2, **caractérisé en ce que** la disposition d'éléments secondaires (15) comporte deux glissières à aimants permanents sous forme de rails profilés (16,17), s'étendant le long du dispositif d'alimentation (12) et de la machine à reprise à commande numérique par ordinateur (13).

4. Equipement selon la revendication 3, **caractérisé en ce que** les rails profilés (16,17) sont disposés aux côtés opposés du dispositif d'alimentation (12) et de la machine à reprise à commande numérique par ordinateur (13).

5. Equipement selon l'une quelconque des revendications 2 à 4, **caractérisé en ce que** les rails profilés (16,17) s'étendent au-delà de la machine à reprise à commande numérique par ordinateur (13), jusque dans la zone du dispositif d'empilage (14).

6. Equipement selon l'une quelconque des revendications 2 à 5, **caractérisé en ce que** les rails profilés (16,17) sont disposés sur un plan situé au-dessus du dispositif d'alimentation (12).

7. Equipement selon l'une quelconque des revendications 2 à 6, **caractérisé en ce qu'**une disposition d'éléments primaires complémentaire (21) est prévue, consistant en un chariot (24) destiné au dispositif d'empilage (14).

8. Equipement selon quelconque des revendications précédentes, **caractérisé en ce que** chacun des chariots (22, 23, 24) comprend une paire de jeux d'éléments primaires (28, 29, 30, 31, 32, 33), reliés par un support (25, 26, 27).

9. Equipement selon quelconque des revendications précédentes, **caractérisé en ce que** les dispositions d'éléments primaires (21) de chacun des chariots (22, 23, 24) sont interconnectés en synchronisme par voie électronique.

10. Equipement selon quelconque des revendications précédentes, **caractérisé en ce que** le chariot (23) de la machine à reprise à commande électronique par ordinateur dispose d'un dispositif de fraisage à 5 axes (35) avec lame contrôlée dans l'espace.

11. Equipement selon quelconque des revendications précédentes, **caractérisé en ce qu'**une seule commande intelligente, préférentiellement une commande numérique par ordinateur, est prévue pour l'ensemble des axes concernés.
